# EUROPEAN PATENT APPLICATION

(11) **EP 2 365 698 A2**
(43) Date of publication of application: **14.09.2011**
(21) Application number: 11151315.6
(22) Date of filing: 18.01.2011
(51) Int. Cl.: H04N 13/00

(54) **3D eyeglasses, charging cradle, 3D display apparatus and system for charging 3D eyeglasses wirelessly**

(30) Priority: 11.03.2010 KR 20100021938
(71) Applicant: SAMSUNG ELECTRONICS CO., LTD., Suwon-si Gyeonggi-do 442-742 (KR)
(72) Inventor: Choi, Sung-jin, Gyeonggi-do (KR); Yi, Kang-hyun, Chungcheongnam-do (KR); Yang, Joon-hyun, Gyeonggi-do (KR); Lee, Myoung-jun, Gyeonggi-do (KR)
(74) Representative: Robinson, Ian Michael

(57) **Abstract**

Three-dimensional (3D) eyeglasses (200), a charging cradle (300), a 3D display apparatus (100), and a system for charging 3D eyeglasses wirelessly are provided. A pair of 3D eyeglasses (200) which operates in association with the 3D display apparatus includes a wireless charging unit (230) which generates electricity using a signal wirelessly received from an external apparatus (100), and a power supply unit (240) which supplies power to the 3D eyeglasses (200) using the electricity charged by the wireless charging unit (230).

## Description

### CROSS-REFERENCE TO RELATED APPLICATION

This application claims priority from Korean Patent Application No. 10-2010-0021938, filed on March 11, 2010, in the Korean Intellectual Property Office, the disclosure of which is incorporated herein by reference in its entirety.

### BACKGROUND

### Field

Apparatuses and methods consistent with exemplary embodiments relate to three-dimensional (3D) eyeglasses, a charging cradle, a 3D display apparatus, and a system for charging 3D eyeglasses wirelessly, and more particularly, to 3D eyeglasses, a charging cradle, a 3D display apparatus, and a system for charging 3D eyeglasses wirelessly, which are provided to allow a user to watch a 3D image presented by displaying a left-eye image and a right-eye image alternately.

### Description of the Related Art

3D stereoscopy is applied to diverse fields such as information communication, broadcasting, medical service, education, training, military, games, animation, virtual reality, computer-aided design (CAD), and industrial technologies, and is the core base technology of next generation 3D stereoscopic multimedia information communication, which is commonly used in the aforementioned diverse fields.

The stereoscopic sense that a person generally perceives is generated by the complex action of diverse factors, such as a degree of change in thickness of eye lens according to the location of an object being observed, an angle difference in the angle of the object as observed from both eyes, differences in location and shape of the object as observed from the right and left eyes, a time difference due to a movement of the object, and various other psychological and memory effects.

Binocular disparity, which appears due to the horizontal separation of an approximate 6-7 cm between a person's left and right eyes, is the most important factor in the perception of a stereoscopic sense. That is, a person observes an object at different angles as seen from the left and right eyes due to the binocular disparity and thus the images perceived by the two eyes are different. If these two images are transmitted to the brain through the retinas, the brain accurately combines two pieces of information and thus perceives an 3D stereoscopic image.

3D image display apparatuses are divided into glasses-type apparatuses, which use special eyeglasses, and non-glasses-type apparatuses which do not use eyeglasses. A glasses-type apparatus may employ a color filter scheme which separates and selects an image using complementary color filters, a polarization filter scheme which separates a left-eye image and a right-eye image using a light shielding effect obtained by a combination of orthogonal polarization elements, or a shutter glasses scheme which alternately shades the left-eye and the right-eye in response to a synchronization signal which projects a left-eye image signal and a right-eye image signal onto a screen, thereby allowing the person to perceive a stereoscopic image.

In order to watch a 3D image using a glasses-type apparatus, users wear 3D eyeglasses. That is, the 3D eyeglasses must be worn in order for a user to perceive a 3D image produced using a glasses-type method.

In order to charge such 3D eyeglasses, the user may insert a disposable battery into the 3D eyeglasses or use a universal serial bus (USB) cable. However, if a disposable battery is used, the battery must be frequently replaced, which increases the cost. Also, if the 3D eyeglasses are charged using a USB cable, the USB cable must always be at hand in case the 3D eyeglasses need to be charged, and the USB cable may be considered to be an unsightly or undesirable peripheral.

Accordingly, there is a need for a method of charging 3D eyeglasses more easily than known heretofore.

### SUMMARY

Exemplary embodiments overcome the above disadvantages and other disadvantages not described above. However, it is understood that an exemplary embodiment is not required to overcome the disadvantages described above, and an exemplary embodiment may not overcome any of the problems described above.

Exemplary embodiments provide 3D eyeglasses which are charged wirelessly using an external apparatus, a charging cradle, a 3D display apparatus, and a system for charging 3D eyeglasses wirelessly.

According to an aspect of an exemplary embodiment, there is provided a pair of 3D eyeglasses which operates in association with a 3D display apparatus, the pair of 3D eyeglasses including: a wireless charging unit which generates electricity using a signal wirelessly received from an external apparatus, and a power supply unit which supplies power to the 3D eyeglasses using the electricity generated by the wireless charging unit.

The wireless charging unit may generate the electricity using a resonance wave.

The wireless charging unit may include: a reception resonator which wirelessly receives the resonance wave from the external apparatus , a rectifier which rectifies the received resonance wave to a direct current (DC), a voltage adjuster which adjusts a voltage of the rectified DC such that the voltage is maintained at a constant level, and a charging unit which supplies the voltage to the power supply unit.

The external apparatus may be the 3D display apparatus, and the reception resonator may have a resonance frequency equal to a resonance frequency of a transmission resonator included in the 3D display apparatus.

The reception resonator may be located in a rim of the pair of 3D eyeglasses.

The reception resonator may be located in a temple of the pair of 3D eyeglasses.

The external apparatus may be a 3D display apparatus.

The wireless charging unit may charge the pair 3D eyeglasses wirelessly using a non-contact charging method.

The wireless charging unit may include: a secondary coil which is magnetically coupled to a primary coil of the external apparatus such that an induced electromotive force is generated, a rectifier which rectifies the induced electromotive force to a DC, a voltage adjuster which adjusts a voltage of the rectified DC such that the voltage is maintained at a constant level, and a charging unit which supplies the voltage to the power supply unit.

The external apparatus may be a charging cradle that includes the primary coil.

The charging unit may be a super capacitor.

According to an aspect of another exemplary embodiment, there is provided a charging cradle for charging a pair of 3D eyeglasses, the charging cradle including: a power supply unit which supplies power, and a wireless transmitter which wirelessly transmits energy using the supplied power in order to charge the pair of 3D eyeglasses.

The charging cradle may be mountable to a 3D display apparatus.

The charging cradle may include a plurality of extensions by which be a plurality of pairs of 3D eyeglasses may be supported.

The charging cradle may include a plurality of containers within each of which a of pair of 3D eyeglasses may be contained.

The charging cradle may include a container within which a plurality of pairs of 3D eyeglasses may be contained collectively.

The charging cradle may include a surface on which a plurality of pairs of 3D eyeglasses may be supported.

According to an aspect of another exemplary embodiment, there is provided a 3D display apparatus which operates in association with a pair of 3D eyeglasses, the 3D display apparatus including: a power supply unit which supplies power, and a wireless transmitter which wirelessly transmits energy using the supplied power in order to charge the pair of 3D eyeglasses.

According to an aspect of another exemplary embodiment, there is provided a system for charging a pair of 3D eyeglasses wirelessly, the system including: a 3D display apparatus which includes a transmission resonator which transmits a resonance wave, and a pair of 3D eyeglasses which includes: a reception resonator which receives the transmitted resonance wave, a rectifier which rectifies the received resonance wave to a DC, a voltage adjuster to adjust the rectified DC such that the voltage is maintained at a constant level, and a charging unit which stores the voltage.

According to an aspect of another exemplary embodiment, there is provided a system for charging a pair of 3D eyeglasses wirelessly, the system including: a charging cradle which includes a primary coil which generates a magnetic field, and a pair of 3D eyeglasses which includes: a secondary coil magnetically coupled to the primary coil, such that an electromotive force is induced therein; a rectifier which rectifies the induced electromotive force to a DC; a voltage adjuster which adjusts a voltage of the rectified DC such that the voltage is maintained at a constant level; and a charging unit which stores the voltage.

Additional aspects and advantages of the present inventive concept will be set forth in the detailed description, will be obvious from the detailed description, or may be learned by practicing the invention.

### BRIEF DESCRIPTION OF THE DRAWING FIGURES

The above and/or other aspects will be more apparent based on the following description of exemplary embodiments, with reference to the accompanying drawings in which:

FIG. 1 is a view illustrating a system for charging 3D eyeglasses wirelessly according to an exemplary embodiment;

FIG. 2 is a block diagram illustrating a 3D TV according to an exemplary embodiment;

FIG. 3 is a block diagram illustrating a pair of 3D eyeglasses according to an exemplary embodiment;

FIG. 4 is a circuit diagram illustrating a wireless charging unit for wirelessly charging a pair of 3D eyeglasses using a resonance wave according to an exemplary embodiment;

FIGS. 5A and 5B are views illustrating a location of a reception resonator in the pair of 3D eyeglasses according to an exemplary embodiment;

FIG. 6 is a block diagram illustrating a wireless charging unit of a pair of 3D eyeglasses and a charging cradle using a non-contact charging method according to another exemplary embodiment; and

FIGS. 7A to 7E are views illustrating diverse types of charging cradles according to exemplary embodiments.

### DETAILED DESCRIPTION OF THE EXEMPLARY EMBODIMENTS

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the invention with unnecessary detail.

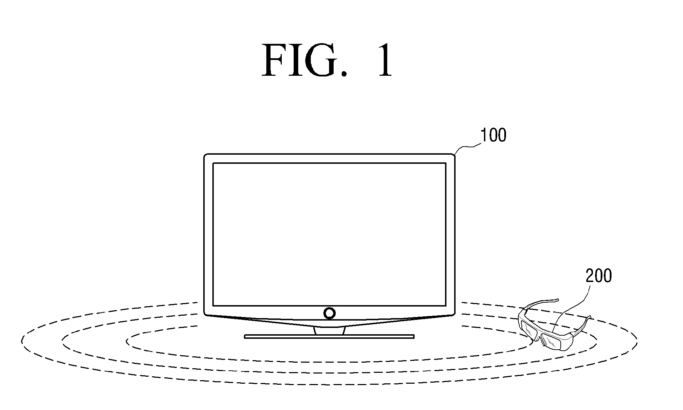

FIG. 1 is a view illustrating a system for charging a pair of 3D eyeglasses 200 wirelessly according to an exemplary embodiment. As shown in FIG. 1, the system includes a 3D television (TV) 100 which wirelessly transmits energy to charge a pair of 3D eyeglasses 200 and the pair of 3D eyeglasses 200 which receive the energy wirelessly.

The 3D TV 100, which is a type of display apparatus, receives a 3D image transmitted from a photographing apparatus such as a camera, or a 3D image transmitted from a broadcasting station after being photographed by a camera and edited/processed by the broadcasting station, processes the received 3D image, and then displays the 3D image on a screen. In particular, the 3D TV 100 processes a left-eye image and a right-eye image with reference to a format of the 3D image, time-divides the processed left-eye image and the processed right-eye image, and displays them alternately. Additionally, the 3D TV 100 generates a synchronization (sync) signal, which is synchronized with the timing at which the left-eye image and the right-eye image are displayed, and transmits the sync signal to the pair of 3D eyeglasses 200.

The pair of 3D eyeglasses 200 opens and closes a left-eye glass and a right-eye glass alternately according to the sync signal received from the 3D TV 100 so that the user can view the left-eye image and the right-eye image with his/her left-eye and right eye, respectively.

If the pair of 3D eyeglasses 200 is located in the vicinity of the 3D TV 100, the pair of 3D eyeglasses 200 also receives a resonance wave which is generated in the 3D TV 100 and which wirelessly charges the 3D eyeglasses 200.

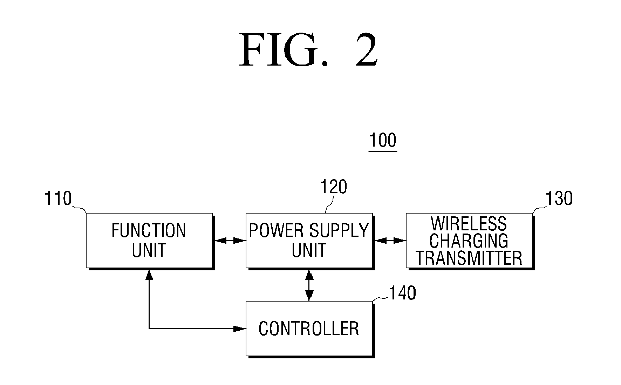

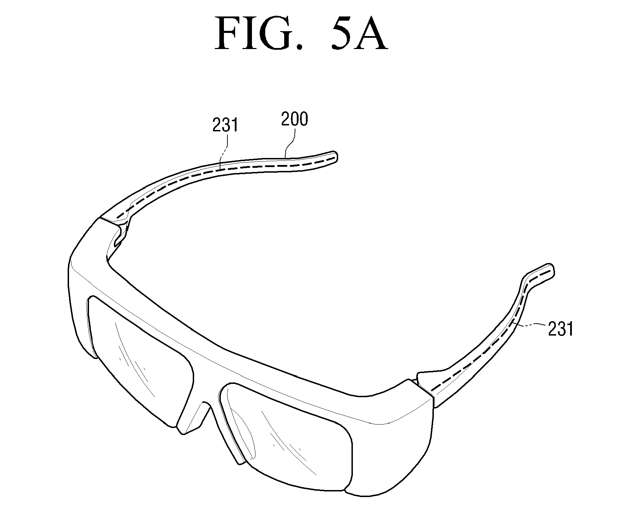

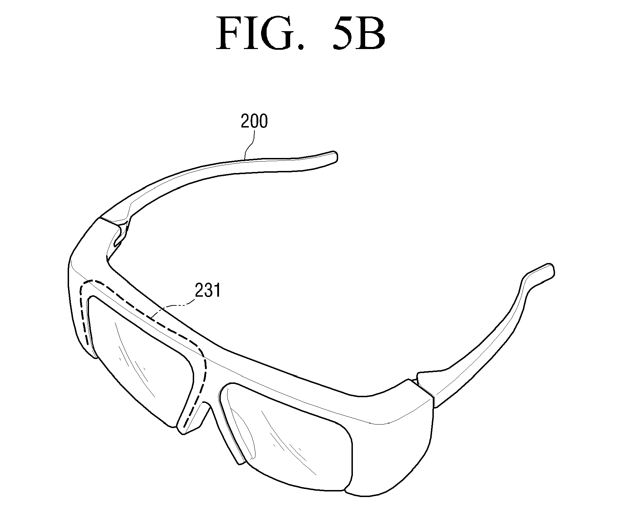

Hereinafter, a method for charging the pair of 3D eyeglasses 200 wirelessly using the resonance wave from the 3D TV 100 will be explained with reference to FIGS. 2 to 5B. FIG. 2 is a block diagram illustrating the 3D TV 100 according to an exemplary embodiment.

As shown in FIG. 2, the 3D TV 100 includes a function unit 110, a power supply unit 120, a wireless charging transmitter 130, and a controller 140.

The function unit 110 performs certain general functions of the 3D TV 100. More specifically, the function unit 110 receives 3D broadcast contents from an external source and replays the 3D broadcast contents.

The power supply unit 120 supplies power to each component of the 3D TV 100 under the control of the controller 140, which will be described below. In particular, the power supply unit 120 supplies power having a sine wave to the wireless charging transmitter 130 in order to charge the pair of 3D eyeglasses 200 wirelessly.

The wireless charging transmitter 130 generates a resonance wave for charging the pair of 3D eyeglasses 200 wirelessly using the power supplied from the power supply unit 120. The resonance wave described herein refers to an electromagnetic wave having a specific resonance frequency.

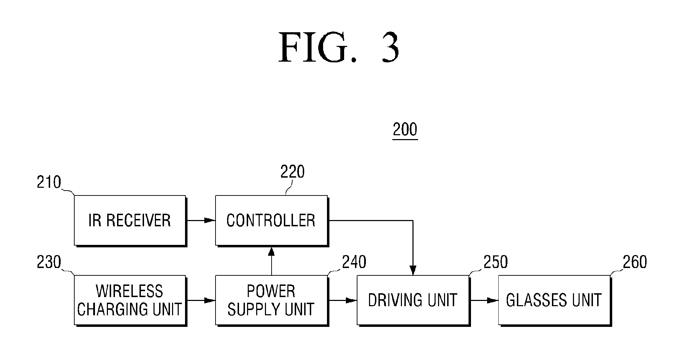

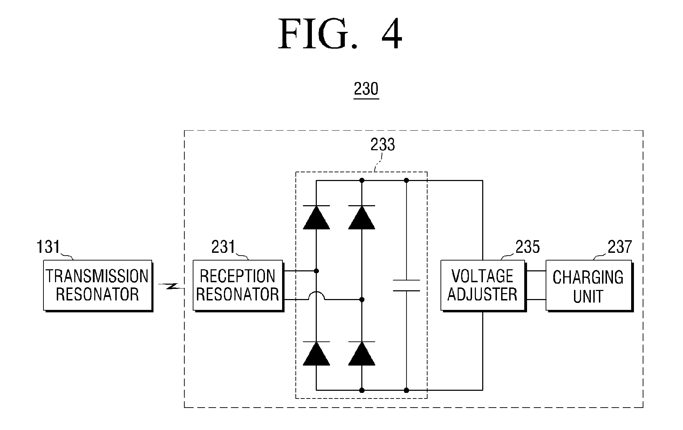

More specifically, the wireless charging transmitter 130 includes a transmission resonator (not shown). The transmission resonator is a resonance circuit that includes an inductor L and a capacitor C and has a specific resonance frequency. The transmission resonator is activated by the power supplied from the power supply unit 120 and generates the resonance wave having a specific resonance frequency in order for a reception resonator of the pair of 3D eyeglasses 200 to generate resonance. The resonance wave generated by the transmission resonator enables the pair of 3D eyeglasses 200 to be charged wirelessly. A wireless charging process in the pair of 3D eyeglasses 200 will be explained in detail below with reference to FIGS. 3 and 4.

The controller 140 controls overall operation of the 3D TV 100 according to a user command received from a user manipulator (not shown).

In particular, the controller 140 controls the power supply unit 120 and the wireless charging transmitter 130 so that the 3D TV 100 can charge the pair of 3D eyeglasses 200 wirelessly.

Also, when the 3D TV 100 charges the pair of 3D eyeglasses 200 wirelessly, the controller 140 may control a graphic user interface (GUI) to be generated to display a wireless charging status.

FIG. 3 is a block diagram illustrating the pair of 3D eyeglasses 200 according to an exemplary embodiment. As shown in FIG. 3, the pair of 3D eyeglasses 200 includes an infrared (IR) receiver 210, a controller 220, a wireless charging unit 230, a power supply unit 240, a driving unit 250, and a glasses unit 260.

The IR receiver 210 receives the sync signal relating to the 3D image from a glasses signal transmission and reception unit (not shown) of the 3D TV 100. In particular, the glasses signal transmission and reception unit irradiates the sync signal using infrared rays having directivity, and the IR receiver 210 receives the sync signal in the form of the irradiated IR rays. For example, the sync signal transmitted from the glasses signal transmission and reception unit to the IR receiver 210 is an IR signal having a frequency of 60 Hz.

The wireless charging unit 230 charges power of the pair of 3D eyeglasses 200 wirelessly using the resonance wave generated by the wireless charging transmitter 130.

The wireless charging unit 230 will be explained in detail with reference to FIG. 4. FIG. 4 is a view schematically illustrating the wireless charging unit 230.

As shown in FIG. 4, the wireless charging unit 230 includes a reception resonator 231, a rectifier 233, a voltage adjuster 235, and a charging unit 237. The reception resonator 231 receives the resonance wave generated in the transmission resonator of the 3D TV 100. In particular, the reception resonator 231 is activated because it has the same resonance frequency as the transmission resonator. The reception resonator 231 may be located in the temples of the pair of 3D eyeglasses 200 or located in the rims of the glasses unit 260 of the pair of 3D eyeglasses 200, or in another suitable location in the pair of eyeglasses 200.

The reception resonator 231 reacts to the resonance wave and the received resonance wave is rectified to a direct current (DC) by the rectifier 233. The rectifier 233 includes a bridge diode which includes four diodes and a capacitor which serves as a filter, as shown in FIG. 4. The rectifier 233 may use a different circuit that rectifies an alternating current (AC) to a DC. Since the DC voltage rectified by the rectifier 233 is not always maintained at a constant level, the voltage adjuster 235 adjusts a DC signal so that the DC voltage is maintained at a constant level. The voltage adjuster 235 may use a DC/DC converter. The charging unit 237 stores the rectified constant voltage. The charging unit 237 may be a super capacitor or a rechargeable battery.

Through the above-described process, the pair of 3D eyeglasses 200 is charged wirelessly using the resonance wave received from the 3D TV 100.

Referring back to FIG. 3, the power supply unit 240 supplies power to the components of the pair of 3D eyeglasses 200 under the control of the controller 220, which will be described below. In particular, the power supply unit 240 supplies the components of the pair of 3D eyeglasses 200 with the power charged by the above-described wireless charging method.

The driving unit 250 generates driving signals based on a control signal received from the controller 220. In particular, since the glasses unit 260 includes a left-eye glass and a right-eye glass, the driving unit 250 generates a left-eye glass driving signal to drive the left-eye glass and a right-eye glass driving signal to drive the right-eye glass, and transmits the left-eye glass driving signal and the right-eye glass driving signal to the left-eye glass and the right-eye glass, respectively.

The glasses unit 260 includes the left-eye glass and the right-eye glass as described above, and opens and closes shutters of the left-eye glass and the right-eye glass according to the driving signal received from the driving unit 250.

The controller 220 controls overall operation of the pair of 3D eyeglasses 200. In particular, the controller 220 generates a control signal based on an output signal received from the IR receiver 210, and transmits the control signal to the driving unit 250 to control the driving unit 250.

Also, the controller 220 controls the power supply unit 240 to supply the components of the pair of 3D eyeglasses 200 with the power wirelessly charged as described above.

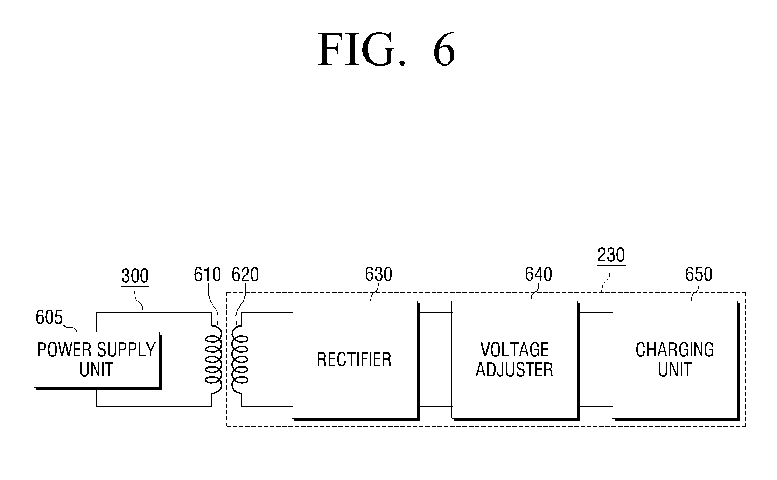

Hereinafter, a method for charging the pair of 3D eyeglasses 200 wirelessly in a non-contact method according to another exemplary embodiment will be explained with reference to FIGS. 6 to 7E. FIG. 6 is a block diagram illustrating the wireless charging unit 230 of the pair of 3D eyeglasses 200 and a charging cradle 300 using a non-contact charging method according to another exemplary embodiment.

As shown in FIG. 6, a charging cradle 300 includes a power supply unit 605 and a primary coil 610. The power supply unit 605 supplies power in the form of a sine wave to the primary coil 610 so that a current flows in the primary coil 610. As the current flows in the primary coil 610, a magnetic field is formed around the primary coil 610.

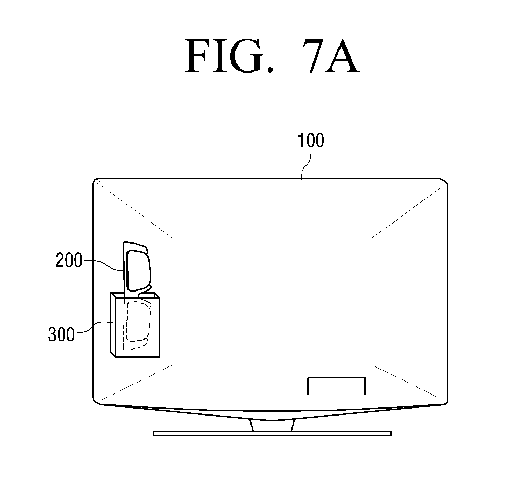

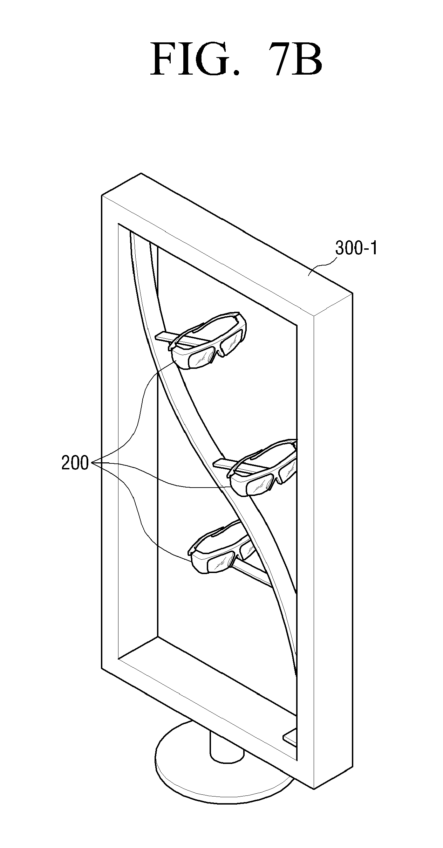

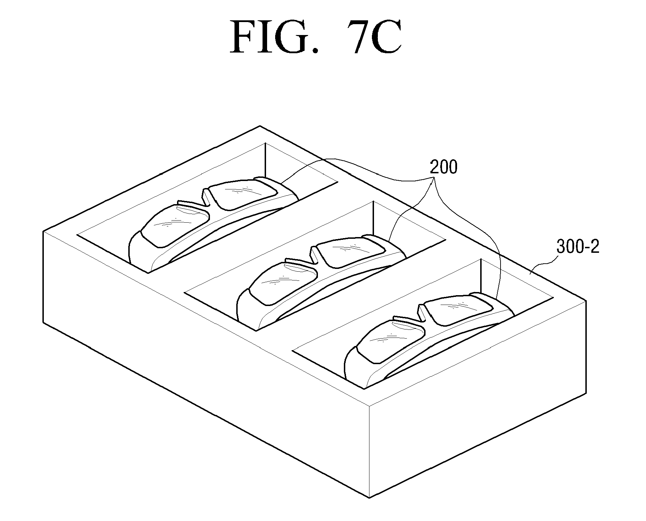

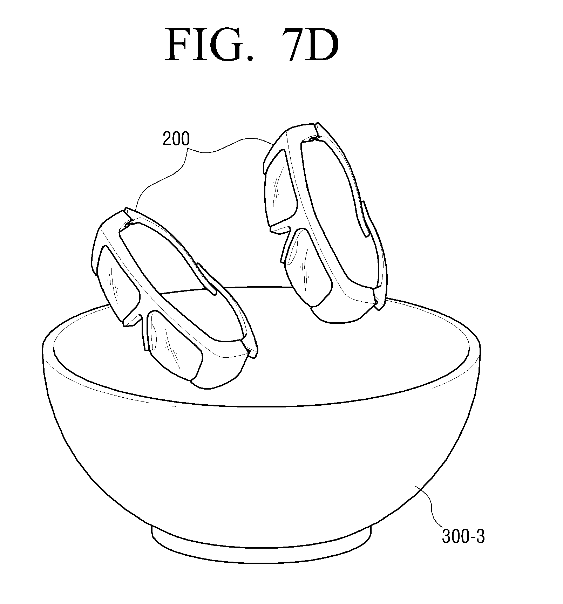

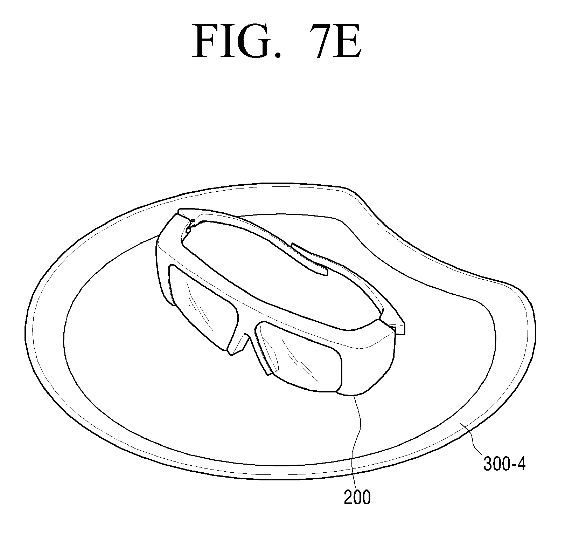

The charging cradle 300 may have diverse shapes as illustrated in FIGS. 7A to 7E. More specifically, as shown in FIG. 7A, the charging cradle 300 may be attached to the 3D TV 100 at a rear surface thereof, or elsewhere. As shown in FIG. 7B, a charging cradle 300-1 may have a plurality of holders on which a plurality of pairs of 3D eyeglasses 200 may be hung. As shown in FIG. 7C, a charging cradle 300-2 may have the shape of a box in which a plurality of pairs of 3D eyeglasses 200 can be housed. As shown in FIG. 7D, a charging cradle 300-3 may have the shape of a basket or bowl within which a plurality of pairs of 3D eye glasses 200 can be contained. As shown in FIG. 7E, a charging cradle 300-4 may have the shape of a dish on which one or more pairs of 3D eyeglasses 200 can be placed. Additionally, an exemplary charging cradle may have another shape as would be understood by one of skill in the art.

The wireless charging unit 230 of the pair of 3D eyeglasses 200, to be used in conjunction with the charging cradle 300, includes a secondary coil 620, a rectifier 630, a voltage adjuster 640, and a charging unit 650. If the secondary coil 620 is located in the vicinity of the magnetic field generated around the primary coil 610 of the charging cradle 300, a current flows in the secondary coil 620 due to electromagnetic induction. That is, the primary coil 610 and the secondary coil 620 are magnetically coupled to each other, thereby causing an induced electromotive force to be generated around the secondary coil 620. The electricity generated in such a manner is rectified to a DC by the rectifier 630. The rectifier 630 may include four diodes of a bridge diode type and a capacitor serving as a filter, as shown in FIG. 4. Of course, a different type of rectifying circuit may be used. The voltage adjuster 640 adjusts the rectified DC voltage to be maintained at a constant level. Also, the charging unit 650 charges the rectified DC voltage. The charging unit 650 may be a rechargeable battery, a super capacitor, or other charging unit as would be understood by one of skill in the art.

According to exemplary embodiments, a pair of 3D eyeglasses 200 can be charged wirelessly without a cable, thus improving a user's convenience in charging the pair of 3D eyeglasses 200.

Although the 3D display apparatus has been described as a 3D TV 100 in the above exemplary embodiments, this is merely an example. Any apparatus that can display the 3D image can be used. For example, the 3D display apparatus may be a 3D monitor or a 3D image projector.

Also, the resonance wave is generated in the 3D TV 100 in the above exemplary embodiments. However, this is merely an example and any apparatus that includes a transmission resonator may be used. For example, the apparatus which generates the resonance wave may be a 3D monitor, a 3D image projector, or a charging cradle.

Also, in the above exemplary embodiments, the charging cradle 300 includes the primary coil 610. However, this is merely an example. Any apparatus that includes a primary coil may be used. For example, the apparatus including the primary coil 610 may be a 3D TV, a 3D monitor, or a 3D image projector.

As described above, since the pair of 3D eyeglasses 200 can be charged wirelessly without a cable, a user's convenience in charging the pair of 3D eyeglasses 200 is improved.

The foregoing exemplary embodiments and advantages are merely exemplary and are not to be construed as limiting the present inventive concept. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A pair of three-dimensional (3D) eyeglasses which operates in association with a 3D display apparatus, the pair of 3D eyeglasses comprising:
a wireless charging unit which charges the pair of 3D eyeglasses wirelessly using a signal from an external apparatus; and
a power supply unit which supplies power using energy from the wireless charging unit.

2. The pair of 3D eyeglasses as claimed in claim 1, wherein the signal from the external apparatus is a resonance wave.

3. The pair of 3D eyeglasses as claimed in claim 2, wherein the wireless charging unit comprises:
a reception resonator which receives the resonance wave from the external apparatus wirelessly;
a rectifier which rectifies the received resonance wave to a direct current (DC);
a voltage adjuster which adjusts a voltage of the rectified DC, such that the voltage is maintained at a constant level; and
a charging unit which supplies the voltage to the power supply unit.

4. The pair of 3D eyeglasses as claimed in claim 3, wherein the external apparatus is the 3D display apparatus and the reception resonator has a resonance frequency equal to a resonance frequency of a transmission resonator included in the 3D display apparatus.

5. The pair of 3D eyeglasses as claimed in claim 3 or 4, wherein the reception resonator is located in a rim of the pair of 3D eyeglasses.

6. The pair of 3D eyeglasses as claimed in claim 3 or 4, wherein the reception resonator is located in a temple of the pair of 3D eyeglasses.

7. The pair of 3D eyeglasses as claimed in any one of claims 1 to 6, wherein the external apparatus is the 3D display apparatus.

8. The pair of 3D eyeglasses as claimed in claim 1, wherein the wireless charging unit comprises:
a secondary coil which is magnetically coupled to a primary coil of the external apparatus, thus receiving an induced electromotive force;
a rectifier which rectifies the induced electromotive force to a DC;
a voltage adjuster which adjusts a voltage of the rectified DC, such that the DC is maintained at a constant level; and
a charging unit which supplies the DC to the power supply unit.

9. The pair of 3D eyeglasses as claimed in claim 8, wherein the external apparatus is a charging cradle that includes the primary coil.

10. The pair of 3D eyeglasses as claimed in claim 3 or 8, wherein the charging unit comprises a super capacitor.

11. A charging cradle for charging the pair of 3D eyeglasses as claimed in any one of claims 1 to 11.

12. The charging cradle as claimed in claim 11, wherein the charging cradle is mountable to a 3D display apparatus.

13. The charging cradle as claimed in claim 11, wherein the charging cradle comprises one of:
a plurality of holders on which a plurality of pairs of 3D eyeglasses may be hung,
a plurality of containers, within each of which a plurality pair of 3D eyeglasses may be contained ,
a container within which a plurality of pairs of 3D eyeglasses may be contained collectively, and
a surface on which a plurality of pairs of 3D eyeglasses may be supported.

14. A system for charging a pair of 3D eyeglasses wirelessly, the system comprising:
a 3D display apparatus which comprises a transmission resonator to transmit a resonance wave; and
a pair of 3D eyeglasses which comprises: a reception resonator to receive the transmitted resonance wave; a rectifier to rectify the received resonance wave to a DC; a voltage adjuster to adjust the rectified DC, such that the DC is maintained at a constant level; and a charging unit to store the rectified voltage.
